(19) Europäisches Patentamt
European Patent Office
Office européen des brevets

(11) **EP 3 928 240 B1**

(12) **EUROPEAN PATENT SPECIFICATION**

(45) Date of publication and mention
of the grant of the patent:
**01.10.2025 Bulletin 2025/40**

(21) Application number: **20715428.7**

(22) Date of filing: **21.02.2020**

(51) International Patent Classification (IPC):
**G06F 30/23** *(2020.01)*     **G06F 30/20** *(2020.01)*
**G06F 30/30** *(2020.01)*     **G06F 111/14** *(2020.01)*
**G06F 111/10** *(2020.01)*

(52) Cooperative Patent Classification (CPC):
**G06F 30/30; G06F 30/20; G06F 30/23;**
G06F 2111/10; G06F 2111/14

(86) International application number:
**PCT/GB2020/050421**

(87) International publication number:
**WO 2020/169990 (27.08.2020 Gazette 2020/35)**

(54) **SIMULATION OF QUANTUM OPTICAL SYSTEMS SUBJECT TO AN ELECTROMAGNETIC PULSE**

SIMULATION VON QUANTUMOPTISCHEN SYSTEMEN, DIE EINEM ELEKTROMAGNETISCHEN IMPULS UNTERLIEGEN

SIMULATION DE SYSTÈMES OPTIQUES QUANTIQUES SOUMIS À UNE IMPULSION ÉLECTROMAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2019 GB 201902463**

(43) Date of publication of application:
**29.12.2021 Bulletin 2021/52**

(73) Proprietor: **Quantopticon Ltd.**
**Guildford**
**Surrey GU2 8LQ (GB)**

(72) Inventors:
• **SLAVCHEVA, Gabriela**
  **Guildford Surrey GU2 8LQ (GB)**
• **KOLEVA, Mirella**
  **Guildford Surrey GU2 8LQ (GB)**

(74) Representative: **Varley, James Richard**
**Venner Shipley LLP**
**200 Aldersgate**
**London EC1A 4HD (GB)**

(56) References cited:
• SLAVCHEVA G ET AL: "Ultrafast pulse phase shift in a charged quantum dot- micropillar system", ARXIV.ORG, CORNELL UNIVERSITY LIBRARY, 201 OLIN LIBRARY CORNELL UNIVERSITY ITHACA, NY 14853, 24 July 2018 (2018-07-24), XP081253198
• G. SLAVCHEVA ET AL: "Coupled Maxwell-pseudospin equations for investigation of self-induced transparency effects in a degenerate three-level quantum system in two dimensions: Finite-difference time-domain study", PHYSICAL REVIEW A (ATOMIC, MOLECULAR, AND OPTICAL PHYSICS), vol. 66, no. 6, 1 December 2002 (2002-12-01), USA, XP055697090, ISSN: 1050-2947, DOI: 10.1103/PhysRevA.66.063418
• SLAVCHEVA G ET AL: "Nonlinear coherent magneto-optical response of a single chiral carbon nanotube", NEW JOURNAL OF PHYSICS, INSTITUTE OF PHYSICS PUBLISHING, BRISTOL, GB, vol. 12, no. 10, 1 October 2010 (2010-10-01), pages 103004, XP020182846, ISSN: 1367-2630

## Description

### Field

This specification describes methods, systems and apparatus for simulating quantum optical systems. In particular, this specification describes the use of a pseudospin equation along with Maxwell's curl equations to simulate the interactions between optical pulses and quantum optical systems.

### Background

Optical devices are increasingly being designed to exploit quantum mechanical effects to provide new functionality and/or increased performance. Simulation of the light-matter interactions in these "quantum optical devices" or their components in order to capture their quantum optical and electromagnetic properties is an important part of the design process of such devices.

However, current methods of simulating quantum optical devices are limited to idealised or extremely simplified systems, such as a single cavity mode interacting with a two-level system. Consequently, they cannot capture important coherent propagation and interaction effects, such as resonant amplification/ absorption and interference.

"Ultrafast pulse phase shift in a charged quantum dot-micropillar system" (G. Slavcheva et al., Phys. Rev. B 99, 115433, 2019) discloses a quantum master equations-based approach based on a vectorial Maxwell-pseudospin model to compute the quantum evolution of the spin populations and coherences in the fundamental singlet trion transition of a negatively charged quantum dot embedded in a micropillar cavity. Excitation of the system is achieved through an ultrashort, either circularly or linearly polarised resonant pulse.

"Coupled Maxwell-pseudospin equations for investigation of self-induced transparency effects in a degenerate three-level quantum system in two-dimensions: Finite-difference time-domain study" (G. Slavcheva et al., Phys. Rev. A 66, 063418, 2002) discloses a self-consistent set of coupled curl Maxwell-pseudospin equations in two spatial dimensions and time for the special case of a degenerate three-level system of quantum absorbers. Maxwell's curl equations are considered to be coupled via macroscopic medium polarization to the three-level atom model for the resonant medium. Two distinct sets of pseudospin equations are obtained corresponding to the TE- and TM-polarized optical waves.

"Nonlinear coherent magneto-optic response of a single chiral carbon nanotube" (G. Slavcheva et al., 2010 New J. Phys. 12 103004) discloses a theoretical framework and dynamical model for the description of the natural optical activity and Faraday rotation in an individual chiral single-wall carbon nanotube (CNT) in the highly nonlinear coherent regime. The model is based on a discrete-level representation of the optically active states near the band edge.

### Summary

The invention is defined in the appended claims.

According to a first aspect of this disclosure, there is described a computer implemented method of manufacturing a quantum optical system, the method comprising: receiving, by one or more processors, properties of the quantum optical system, the properties of the quantum system comprising a system Hamiltonian comprising an unperturbed Hamiltonian representing an N-level system and an interaction Hamiltonian representing a dipole coupling interaction, wherein $N \geq 2$, wherein the properties of the quantum optical system are based on a design for the quantum optical system; and receiving, by the one or more processors, properties of an electromagnetic pulse or pulse trains. The method further comprises simulating, by the one or more processors, time evolution of the quantum optical system under the electromagnetic pulse, comprising: determining a set of pseudospin equations based on the properties of the quantum optical system, wherein pseudospin vector components in the pseudospin equations are coupled to an electric and/or magnetic field via a macroscopic polarisation of the quantum optical system, and wherein the macroscopic polarisation of the quantum optical system is derived by expanding a local displacement operator of the macroscopic polarisation in terms of generators of the SU(N) Lie algebra and comparing the expansion to an expansion of expressing the interaction Hamiltonian in terms of the generators of the SU(N) Lie algebra; determining initial values of electric field components and/or magnetic field components, and pseudospin components on a grid corresponding to a region of space comprising the optical system based on the pseudospin equations and the properties of the electromagnetic pulse; performing temporally shifted updating of the electric field components, the magnetic field components and the pseudospin components on the grid based on Maxwell's curl equations and the pseudospin equation to simulate time evolution of the quantum optical system under the electromagnetic pulse; wherein the grid comprises: a first set of grid points associated with the magnetic field components; a second set of grid points associated with the electric field and pseudospin components, wherein the second set of grid points is spatially offset from the first set of grid points. Performing temporally shifted updating of the electric field components, the magnetic field components and the pseudospin components further comprises introducing one or more random fluctuations to the electric field components at each time step, wherein the one or more random fluctuations obey a predefined set of statistics. The method further comprises comparing , by the one or more processors, quantities derived from the simulated time evolution of the quantum optical system under the electromagnetic pulse to a desired result; validating, by one or more processors, the design in response to the determined time evolution of the quantum optical system achieving the desired result; and manufacturing the quantum optical system according to the validated design.

The second set of grid points may comprise a first subset of grid points associated with the electric field components and a second subset of grid points associated with the pseudospin components, wherein the first subset of grid points and second subset of grid points are spatially offset. Alternatively, each grid point in the second set of grid points may be associated with an electric field component and a pseudospin component.

The properties of the electromagnetic pulse may comprise a time dependence of the pulse at one or more points in space.

The set of pseudospin equations comprises a differential equation describing time evolution of a real pseudospin vector associated with a density matrix of the quantum optical device component. In some embodiments, N>2.

The set of pseudospin equations may comprise the equations:

$$\frac{\partial S_i}{\partial t} = f_{ijk}\gamma_j S_k$$

where $S_i$ are the pseudospin components, $f_{ijk}$ are the structure constants of an SU(N) Lie algebra representing a density matrix of the quantum optical device component, $\gamma_j$ are components of a torque vector representing the effects of the electromagnetic pulse and $t$ is time.

The set of pseudospin equations may comprise a damping term, and wherein the damping term comprising a longitudinal relaxation term and/or a dephasing relaxation term.

Performing temporally shifted updating of the electric field components, the magnetic field components and the pseudospin components on the grid may comprise using a time-stepping predictor-corrector iterative method.

Performing temporally shifted updating of the electric field components, the magnetic field components and the pseudospin components on the grid may comprise: updating the magnetic field components at the first set of grid points at a first set of time steps using a finite-difference method; and updating the electric field components and pseudospin components at the second set of grid points at a second set of time steps using a finite-difference method, wherein the second set of time steps is temporally offset from the first set of time steps.

The method may further comprise determining the first set of grid points and the second set of grid points in dependence on a geometry of the quantum optical system.

The quantum optical system may comprise one or more of: a quantum optical device; a quantum optical device component; a quantum-optical logic gate; a polarisation switch; a controlled phase gate; a spin-photon entangler; a quantum dot; a carbon nanotube; photonic crystal cavities; ring cavities; spherical cavities; and/or a semiconductor microcavity.

The time evolution of the quantum system may be used to determine one or more physical properties of the quantum optical system.

The physical properties of the quantum optical system may comprise one or more of: a lifetime of an excited state of the quantum optical device component; a spatial and/or temporal correlation function of electric fields in the quantum optical device component; a polarised Time-Resolved Photoluminescence trace; a Faraday rotation angle; polarisation rotation and/or a phase shift.

The properties of the electromagnetic pulse may comprise: properties of electric field source; properties of a magnetic field source; and/or properties of a current density source.

The method may further comprise: in response to the determined time evolution of the quantum optical system failing to achieve the desired result, redesigning the quantum optical system and repeating the simulation to validate the redesigned quantum optical system.

The method may further comprise manufacturing the quantum optical system according to the validated design.

According to a further aspect of this disclosure, there is described apparatus comprising: one or more processors; and a memory, the memory comprising computer readable instructions that, when executed by the one or more processors, cause the apparatus to perform any of the methods described herein.

According to a further aspect of this disclosure, there is described a computer program product comprising computer readable instructions that, when executed by a computer, cause the computer to perform any of the methods described herein.

An advantage of using pseudospin rather than a density matrix stems from exploiting the symmetries of the SU(N) Lie group to derive a simple generalised equation of motion for the real coherence vector for an arbitrary-level system. This equation of motion is of the type of spin (pseudospin) precessing in a magnetic field. Moreover, the group-theoretical approach allows us to derive relationships between the pseudospin (coherence) vector components and the polarisation components, and thus couple the quantum dynamics equations to the Maxwell's equations in vector form, which can be solved self-consistently.

In addition, from practical computational point of view, the pseudospin vector components are real and the electric and magnetic fields in Maxwell's curl equations are also real. Thus, the computational load is reduced when compared to working with complex density matrix components and treating real and imaginary parts separately, which would double the number of equations.

Furthermore, the real-vector representation of the density matrix allows for a simple geometrical interpretation of the system dynamics - e.g. for the 2-level system on the Bloch sphere, or as generalized rotations of the real state vector in the $N^2$ - 1 Hilbert space for an N-level system.

As used herein, the term quantum optical device component is preferably used to connote a component of an optical device that exhibits quantum mechanical behaviour. The term quantum optical device component may include an entire quantum optical device. For convenience, the quantum optical device component may also be referred to herein as a quantum system.

**Brief Description of the Drawings**

Figure 1 shows an example of an electromagnetic pulse being applied to a quantum optical device;
Figure 2 shows a flow diagram of an example method of simulating a quantum optical device component;
Figure 3 shows an example of a grid used for simulating a quantum optical device component;
Figure 4 shows a schematic example of a computing device for simulating a quantum optical device component; and
Figure 5 is a flowchart illustrating a method of validating a design for a quantum optical system.

**Detailed Description**

In the following detailed description, only certain exemplary embodiments of the present invention have been shown and described, simply by way of illustration. As those skilled in the art would realise, the described embodiments may be modified in various different ways, all without departing from the scope of the present invention. Accordingly, the drawings and description are to be regarded as illustrative in nature and not restrictive. Like reference numerals designate like elements throughout the specification.

Methods, systems and apparatus described herein model light-matter interactions in quantum optical systems, such as semiconductor structures and devices. The approach models the quantum dynamics of coherent interactions of electromagnetic pulses with discrete multi-level quantum systems describing the energy levels in a quantum nanostructure (i.e. a quantum optical system). The method is based on solving pseudospin equations derived from the density matrix equations for an N-level system, describing the time evolution of the quantum system under external dipole-coupling perturbation, and Maxwell's curl equations for the electromagnetic pulse propagation across the quantum optical device. A full vector treatment of the electromagnetic wave propagation allows the optical field polarization to be taken into account. The pseudospin equations and Maxwell's equations can be coupled through the macroscopic medium polarization induced by the pulse.

A real state (coherence or pseudospin) vector representation of the density matrix and the SU(N) Lie group theory are exploited to derive equations of motion for a generic N-level quantum system. The active region in the quantum optical system is treated quantum-mechanically, and combined with Maxwell's equations in vector form for the optical wave propagation. The equations used in the method may be referred to as "Maxwell-pseudospin equations".

In addition, dissipation and decoherence in the system are, in some embodiments, taken into account through dissipation terms in the pseudospin equations. The dissipation terms may be separated into terms responsible for longitudinal (population relaxation) processes and dephasing (decoherence) processes. When the system is an open system interacting with a bath, the equations used in the method may be referred to as "master Maxwell-pseudospin equations".

The resulting set of equations may be solved directly in the time domain, for example using the Finite-Difference-Time-Domain (FDTD) method, without invoking any approximations (such as slowly-varying amplitude or rotating wave approximations). Thus, the method can describe both linearly and circularly (elliptically) polarised pulse propagation and interactions on an ultrashort time scale, including few-optical cycle pulses.

In some embodiments, the use of the FDTD method allows macroscopic boundary conditions to be imposed and thus simulate the spatio-temporal dynamics in realistic system geometries. For instance, the structure geometry may be described by a refractive index profile (e.g. for distributed Bragg reflectors in a microcavity, or micropillar cavity geometry). Unlike, for example, current simulation methods, the device is not described by a dipole, but by a discrete-energy level configuration that maps the dipole-allowed optical transitions and takes into account the incoherent processes. The driving pulse excites/de-excites the level populations, while at the same time decoherence (transverse polarisation relaxation) can also properly be taken into account.

The systems, methods and apparatus described herein may provide improvements in the design of quantum optical systems. Using a pseudospin representation can allow multi-level quantum systems to be simulated, accounting for multiple optical transitions in the system being modelled. Ultrashort pulses can be modelled, allowing coherent interactions to be described. A wide range of quantum system geometries can be simulated, allowing whole devices to be simulated, not just idealised systems. Open quantum systems, in which energy can be put into and taken out of the system, can be modelled. Multiple types of pulse polarisation can be simulated (i.e. circularly/elliptically polarised electromagnetic pulses).

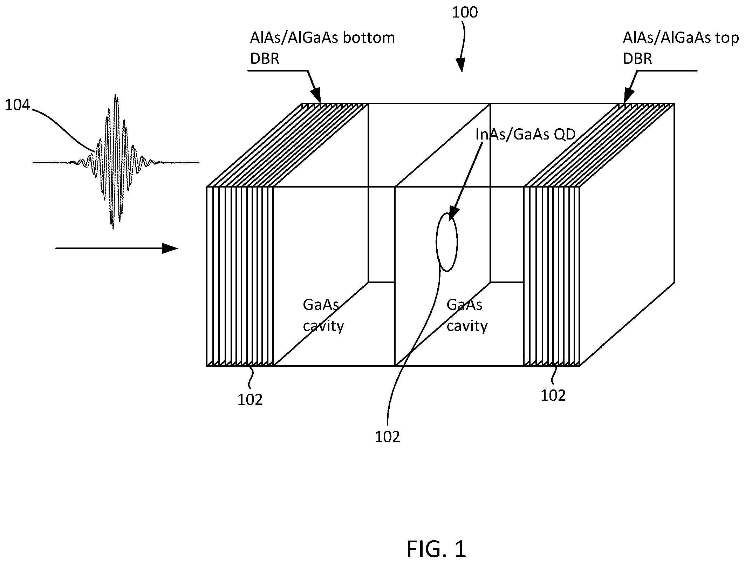

Figure 1 shows an example of an electromagnetic pulse being applied to a quantum optical system that can be modelled using the methods described herein.

The quantum optical system 100 comprises one or more quantum optical device components 102. The quantum optical system 100 may be a single quantum optical device component 102, or alternatively may comprise a plurality of optical device components 102. The quantum optical system 100 is a system whose behaviour and/or properties are influenced by quantum mechanical light-matter interactions.

The quantum optical system 100 may comprise one or more quantum nanostructures. Examples of quantum optical device/quantum optical device components include, but are not limited to: one or more quantum dots (e.g. an ensemble of quantum dots); and/or one or more quantum wells; and/or one or more carbon nanotubes (e.g. a single carbon nanotube); and/or one or more semiconductor microcavities; and/or one or more multilayer-semiconductor laser structures (e.g. Vertical-Cavity Surface-Emitting Lasers ( VCSELs)); and/or one or more photonic metamaterials; and/or one or more optical waveguides; and/or one or more quantum nanostructures embedded in a host semiconductor matrix; and/or one or more distributed Bragg reflector stacks.

An electromagnetic pulse 104 is applied to the quantum optical system 100. The electromagnetic pulse is an electromagnetic wave that propagates through the system and interacts with the quantum optical system 100. Interactions of the electromagnetic pulse 104 with the quantum optical system 100 may comprise causing quantum transitions between energy levels in the quantum optical system 100 or one or more of the quantum optical device components 102.

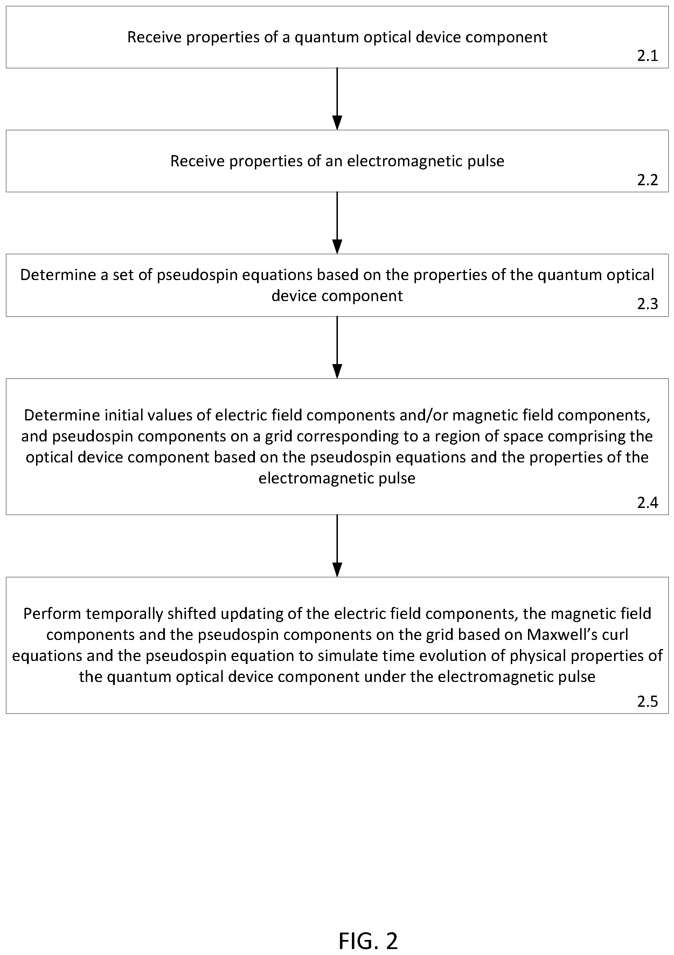

Figure 2 shows a flow diagram of an example method of simulating a quantum optical system. The method can be implemented by one or more computing devices.

At operation 2.1, properties of a quantum optical system are received. Properties of the quantum optical system may comprise any physical property that is relevant to the behaviour of the optical system under an electromagnetic pulse. At least some of the properties are input by a user. Some of the properties may be pre-set.

The properties of the quantum optical system may comprise one or more microscopic properties of the system. Microscopic properties of the system are properties of the system that define quantum mechanical properties of the system/materials in the system. Microscopic properties comprise microscopic material parameters. Examples include energy levels within the system, relaxation times, and/or dipole moments between pair of levels. It will be recognised that many other microscopic material parameters can be used.

The properties of the quantum optical system may comprise one or more macroscopic properties of the system. Macroscopic properties of the system may comprise macroscopic parameters. Examples of macroscopic parameters include refractive index profiles of the quantum system, dielectric constants in the quantum system, and structure dimensions and/or structure geometry of the quantum system. It will be recognised that many other macroscopic material parameters can be used.

The received properties of the quantum optical device component may be used to define a Hamiltonian, $\hat{H}_0$, for the unperturbed quantum optical device component.

Examples of properties of the quantum optical device component include: geometry of the quantum optical device component (such as the size, shape, orientation and/or arrangement of the component); symmetries of the quantum optical device; one or more materials in the quantum optical device component; properties of the medium in which the quantum optical device component resides; longitudinal relaxation rates of the system; and/or transverse dephasing rates of the system. In some embodiments, a refractive index profile for the quantum optical device component may be provided and/or the surrounding medium may be provided.

At operation 2.2, properties of an electromagnetic pulse are received. The properties of the electromagnetic pulse define the electromagnetic pulse that is applied to the quantum optical device component.

Properties of the electromagnetic pulse may include, for example, one or more of: polarisation; intensity; wavelength; frequency; angle of incidence; source location; and/or propagation direction. In some embodiments, the properties of the electromagnetic pulse comprise the time dependence of the electromagnetic pulse along a boundary of the region being simulated (for example, the system can be modelled using the Goursat initial boundary value problem). However, other types of initial boundary condition may alternatively be used. The initial boundary conditions may also comprise initial values of the pseudospin vector in the quantum system (i.e. an initial population for each component of the

pseudospin vector, $S_{i0}$).

Further boundary conditions may also be imposed. In addition to the initial boundary conditions, one or more macroscopic boundary conditions can also be imposed. Examples include, but not limited to: Perfectly Matched Layers, Perfectly Engquist-Majda Absorbing Boundary conditions, and Mur boundary conditions. These may, for example, be used to eliminate spurious reflections from boundaries and ensure transmission of the pulses through the boundaries.

At operation 2.3, a set of pseudospin equations are derived based on the properties of the quantum optical device component. The set of pseudospin (or real state coherence vector) equations are derived from a density matrix representing the system using an SU(N) representation of the density matrix and quantum system Hamiltonian.

The Hamiltonian of the quantum system under the applied electromagnetic pulse may be given by:

$$\widehat{H}(t) = \widehat{H}_0 + \widehat{H}_{int}(t),$$

where $\hat{H}_0$ is the Hamiltonian of the unperturbed system and $\hat{H}_{int}(t)$ is the dipole-coupling interaction:

$$\widehat{H}_{int}(t) = e\boldsymbol{E} \cdot \hat{\boldsymbol{r}}.$$

that couples the local displacement operator, $\hat{r}$, to the electric field, $\boldsymbol{E}$ and where e is the elementary charge (which for an electron is <0) The interaction may be phenomenologically introduced by assigning complex Rabi frequencies to allowed optical transitions between pairs of the N levels in the system.

For example, consider a transverse electromagnetic wave propagating along the z-axis exciting a given i→j (i<j) transition in an N-level system. Let the wave be circularly polarized in the plane perpendicular to z, with in-plane electric-field components $E_x$ and $E_y$. The (i,j) term of the interaction Hamiltonian for such a system will contain a complex coherent term, where the sign '±' depends on the helicity of the pulse. For a dipole coupling interaction of this type, the Rabi frequencies corresponding to $E_x$ and $E_y$ are given by

$$\Omega_x = \frac{\wp}{\hbar} E_x$$

$$\Omega_y = \frac{\wp}{\hbar} E_y$$

where $\wp = |\langle i|e\hat{r}|j\rangle|$ is the magnitude of the dipole moment matrix element between levels $i$ and $j$.

Considering only a single transition for convenience, the interaction Hamiltonian can be written as

$$\widehat{H}_{int} = \hbar \begin{pmatrix} 0 & 0 & 0 & \cdot & \cdot & 0 & 0 & 0 \\ \cdot & \cdot & \cdot & \cdot & \cdot & \cdot & \cdot & \cdot \\ 0 & 0 & 0 & \cdot & \cdot & \Omega_x - i\Omega_y & \cdot & 0 \\ 0 & 0 & 0 & \cdot & \cdot & \cdot & \cdot & 0 \\ \cdot & \cdot & \cdot & \cdot & \cdot & \cdot & \cdot & \cdot \\ 0 & \cdot & \Omega_x + i\Omega_y & 0 & \cdot & \cdot & \cdot & 0 \\ \cdot & \cdot & \cdot & \cdot & \cdot & \cdot & \cdot & \cdot \\ 0 & 0 & 0 & \cdot & \cdot & 0 & 0 & 0 \end{pmatrix}$$

It will, however, be appreciated that the interaction Hamiltonian may include multiple allowed transitions between levels, each associated with their own dipole moment matrix element $\wp^{ij} = \langle i|e\hat{r}|j\rangle$ and Rabi frequencies $\Omega_x^{ij}$ and $\Omega_y^{ij}$. Other phenomenologically introduced interaction Hamiltonians may alternatively or additionally be used.

The Hamiltonian can be used to describe the time evolution of the density matrix of the quantum system, using the Liouville-von Neumann equation

$$ i\hbar \frac{\partial \hat{\rho}}{\partial t} = [\hat{H}, \hat{\rho}]. $$

However, the time evolution of the quantum system under the electromagnetic pulse is difficult to simulate directly using this equation. Instead, a set of pseudospin (i.e. real state coherence vector) equations are used.

The set of pseudospin equations are based on a representing the density matrix and Hamiltonian in terms of generators of the SU(N) Lie algebra (where N is the number of levels in the N-level system used to model the quantum optical device component). The density matrix can be written as:

$$ \hat{\rho}(t) = \frac{1}{N}\hat{I} + \frac{1}{2}\sum_{j-1}^{N^2-1} S_j(t)\hat{\lambda}_j, $$

where $\hat{I}$ is the identity matrix and $\hat{\lambda}_j$ are the generators of the SU(N) lie algebra, of which there are $N^2\text{-}1$ satisfying the commutation relation:

$$ [\hat{\lambda}_i, \hat{\lambda}_j] = 2if_{ijk}\hat{\lambda}_l, $$

Where $f_{ijk}$ are the structure constants of the SU(N) Lie algebra.

The $S_j(t)$ each define one of $N^2\text{-}1$ components of a pseudospin vector, $S$, and are given by

$$ S_j(t) = Tr(\hat{\rho}(t)\hat{\lambda}_j), $$

where $Tr$ is the trace operation.

Similarly, the Hamiltonian can be written in terms of the generators of the SU(N) lie algebra as:

$$ \hat{H}(t) = \frac{\hbar}{2}\left[\frac{2}{N}\left(\sum_{k=1}^{N}\omega_k\right)\hat{I} + \sum_{j-1}^{N^2-1}\gamma_j(t)\hat{\lambda}_j\right], $$

where $\omega_k$ are the energy levels of the N-level system (given by the eigenvalues of $\hat{H}_0$) and the $\gamma_j(t)$ each define one of $N^2\text{-}1$ components of a "torque" vector, $\gamma$, and are given by

$$ \gamma_j(t) = Tr(\hat{H}(t)\hat{\lambda}_j), $$

where $Tr$ is the trace operation. The torque vector thus represents the time dependent perturbation in the Hamiltonian, i.e. the interaction of the electromagnetic pulse with the system. The torque vector may be thought of as an effective magnetic field around which the pseudospin vector precesses.

Based on this representation, a set of pseudospin equations (i.e. an equation for each component of $S$) can be derived that describe the time evolution of the pseudospin vector:

$$ \frac{\partial S}{\partial t} = f\gamma \times S, $$

where $f$ guarantees that $S$ is a constant length. Equivalently, each equation in the set of pseudospin equations can be written as:

$$ \frac{\partial S_i}{\partial t} = f_{ijk}\gamma_j S_k. $$

In some embodiments, one or more damping terms may be introduced to the set of pseudospin equations to model dissipation and/or decoherence in the quantum optical device component. The damping terms may comprise a longitudinal (population relaxation) term and/or a dephasing (decoherence) term.

In some embodiments, the damping terms may be derived from damping terms introduced into the Liouville equation. A transverse (polarisation) relaxation rate, $\hat{\Gamma}_t$, may be introduced to the Liouville equation.

The damping due to longitudinal relaxation processes can be described by a $N^2 \times N^2$ sparse block diagonal matrix, given by:

$$\hat{\Gamma}_{damp} = \sum_{k=1}^{N} \sum_{i=1}^{N} (\Gamma_{ik} - \Gamma_{ki})(1 - \delta_{ik})$$

where $\Gamma_{ik}$, $i, k = 1, 2, ..., N$ are population transfer rates between each pair of levels in the quantum system. Denoting the diagonal elements of the above matrix by $\hat{\Gamma}_i$, $i = 1, 2, ... , N$, each being an $N \times N$ matrix describing the relaxation of the diagonal (population) components of the density matrix.

Alternatively or additionally, a longitudinal (population) relaxation rate, $\hat{\sigma}$, may be introduced to the Liouville equation. The longitudinal (population) relaxation rate may be given by:

$$\hat{\sigma} = diag(Tr(\hat{\Gamma}_i \hat{\rho}))$$

When both of these terms are included in the Liouville equation, the time dependence of the density matrix is governed by:

$$\frac{\partial \hat{\rho}}{\partial t} = \frac{i}{\hbar}\left[\hat{H}, \hat{\rho}\right] + \hat{\sigma} - \hat{\Gamma}_t \hat{\rho}.$$

The set of pseudospin equations is then given by:

$$\frac{\partial S_i}{\partial t} = \begin{cases} f_{ijk}\gamma_j S_k + \dfrac{1}{2}Tr(\hat{\sigma}\hat{\lambda}) - \dfrac{1}{T_i}(S_i - S_{ie}) \\ \quad for\ i = 1, 2 \ldots N(N-1) \\ f_{ijk}\gamma_j S_k + \dfrac{1}{2}Tr(\hat{\sigma}\hat{\lambda}) \\ for\ i = N(N-1) + 1 \ldots N^2 - 1, \end{cases}$$

where $T_i$ are non-uniform relaxation times, such as spin-decoherence times, describing the relaxation of the real state vector components, $S_i$, towards their equilibrium value, $S_{ie}$. These may be phenomenologically introduced. For example, relaxation times may be obtained experimentally. The relaxation times may alternatively be calculated microscopically, for example using electronic band structure calculations, such as the K.P method.

The pseudospin is coupled to the electric and magnetic fields (i.e. Maxwell's equations) of the quantum system via the macroscopic polarisation, given for a three dimensional system by:

$$P_x = -\wp N_d f_1(S_i),$$

$$P_y = -\wp N_d f_2(S_i)$$

$$P_z = -\wp N_d f_3(S_i)$$

where $N_d$ is the resonant dipole density, $\wp$ is the magnitude of the dipole moment matrix element

$$\wp = |\langle i|e\hat{r}|j\rangle|,$$

between states $|i\rangle$ and $|j\rangle$, and $f_k(S_i)$, k=1,2,3, are functions reflecting the specific relationship between the coherence vector components and the respective macroscopic polarisation components.

The functions $f_k$ can be derived from the equation for macroscopic polarisation, $P$, in terms of the density matrix, $\hat{\rho}$, and local displacement operators, $\hat{r}$:

$$P = -eN_d Tr(\hat{\rho} \cdot \hat{r}).$$

The local displacement operator and density matrix can be expanded in terms of the generators of the SU(N) Lie algebra and compared to the form of the phenomenologically introduced interaction Hamiltonian $H_{int}(t)$ to determine the functions $f_k$.

As an example, consider the phenomenologically introduced interaction Hamiltonian described above in relation to operation 2.2 relating to a transition between a single pair of levels,

$$\hat{H}_{int} = \hbar \begin{pmatrix} 0 & 0 & 0 & \cdot & \cdot & 0 & 0 & 0 \\ \cdot & \cdot & \cdot & \cdot & \cdot & \cdot & \cdot & \cdot \\ 0 & 0 & 0 & \cdot & \cdot & \Omega_x - i\Omega_y & \cdot & 0 \\ 0 & 0 & 0 & \cdot & \cdot & \cdot & \cdot & 0 \\ \cdot & \cdot & \cdot & \cdot & \cdot & \cdot & \cdot & \cdot \\ 0 & \cdot & \Omega_x + i\Omega_y & 0 & \cdot & \cdot & \cdot & 0 \\ \cdot & \cdot & \cdot & \cdot & \cdot & \cdot & \cdot & \cdot \\ 0 & 0 & 0 & \cdot & \cdot & 0 & 0 & 0 \end{pmatrix} .$$

Comparing this to the form of the interaction Hamiltonian $\hat{H}_{int}(t) = e\boldsymbol{E} \cdot \hat{r}$ and using the definition of the Rabi frequencies, the in-plane dipole moment operator can be decomposed into two Cartesian components as

$$e\hat{r} = e(\widehat{r_x}\vec{e}_x + \widehat{r_y}\vec{e}_y)$$

where $\vec{e}_x$ and $\vec{e}_y$ are unit vectors in the x and y directions respectively.

In the above example, the coefficients $\widehat{r_x}$ and $\widehat{r_y}$ are $\lambda$-generators of the SU(N) Lie algebra. $\widehat{r_x}$ has unity at positions (i,j) and (j,i) and $\widehat{r_y}$ has the imaginary number -i at positions (i,j) and i at positions (j,i), i.e.:

$$\mathbf{r} = r_0 \left\{ \begin{pmatrix} 0 & 0 & 0 & \cdot & \cdot & 0 & 0 & 0 \\ \cdot & \cdot & \cdot & \cdot & \cdot & \cdot & \cdot & \cdot \\ 0 & 0 & 0 & \cdot & \cdot & 1 & \cdot & 0 \\ 0 & 0 & 0 & \cdot & \cdot & \cdot & \cdot & 0 \\ \cdot & \cdot & \cdot & \cdot & \cdot & \cdot & \cdot & \cdot \\ 0 & \cdot & 1 & 0 & \cdot & \cdot & \cdot & 0 \\ \cdot & \cdot & \cdot & \cdot & \cdot & \cdot & \cdot & \cdot \\ 0 & 0 & 0 & \cdot & \cdot & 0 & 0 & 0 \end{pmatrix} \vec{e}_x + \begin{pmatrix} 0 & 0 & 0 & \cdot & \cdot & 0 & 0 & 0 \\ \cdot & \cdot & \cdot & \cdot & \cdot & \cdot & \cdot & \cdot \\ 0 & 0 & 0 & \cdot & \cdot & -i & \cdot & 0 \\ 0 & 0 & 0 & \cdot & \cdot & \cdot & \cdot & 0 \\ \cdot & \cdot & \cdot & \cdot & \cdot & \cdot & \cdot & \cdot \\ 0 & \cdot & i & 0 & \cdot & \cdot & \cdot & 0 \\ \cdot & \cdot & \cdot & \cdot & \cdot & \cdot & \cdot & \cdot \\ 0 & 0 & 0 & \cdot & \cdot & 0 & 0 & 0 \end{pmatrix} \vec{e}_y \right\} .$$

where $r_O$ is the dipole length scale. To determine which $\lambda$-generators these correspond to, the following formula can be used that depends on the number of discrete levels of the system, $N$:

$$\widehat{r_x} = \hat{\lambda}_{j-i+\sum_{d=1}^{i-1}(N-d)}$$

$$\widehat{r_y} = \hat{\lambda}_{j-i+\sum_{d=1}^{i-1}(N-d)+N(N-1)/2}.$$

These can be substituted into the definition of the macroscopic polarisation to give, for the *x* and *y* components of the polarisation:

$$P_x = -\wp N_d Tr(\hat{\rho} \cdot \hat{\lambda}_{j-i+\sum_{d=1}^{i-1}(N-d)}),$$

$$P_y = -\wp N_d Tr(\hat{\rho} \cdot \hat{\lambda}_{j-i+\sum_{d=1}^{i-1}(N-d)+N(N-1)/2}).$$

A comparison of the terms in the trace to the definition of the pseudospin vector components, $S_j(t) = Tr(\hat{\rho}(t)\hat{\lambda}_j)$, gives the functions $f_k$.

This approach can be generalised to different types of phenomenologically constructed interaction Hamiltonians to derive the functions $f_k$ for arbitrary systems and system geometries.

At operation 2.4, initial values of electric field components and/or magnetic field components, and pseudospin components are determined on a grid corresponding to a region of space comprising the optical device component. The initial values may be based on the pseudospin equations and the properties of the electromagnetic pulse.

As described above, the initial values of the electric and/or magnetic field of the applied pulse are specified as part of the boundary conditions for the system. The pseudospin initial conditions may be based on the equilibrium values of the pseudospin components (e.g. the initial pseudospin values may be set equal to their equilibrium value).

In some embodiments, the full time history of the impinging electromagnetic pulse is supplied in one or more regions of space. Initial values of the electric and magnetic fields may be based on this time history.

The magnetic field, electric field and pseudospin are simulated on a discretised grid that represents the region of space occupied by the optical device component and the surrounding medium. The grid comprises a first set of grid points associated with the magnetic field components (also described herein as the first grid, or magnetic field grid). Each point in the first grid represents one or more components of the magnetic field at a corresponding spatial point in the region being simulated.

The grid further comprises a second set of grid points associated with the electric field components and pseudospin components. The second set of grid points is spatially offset from the first set of grid points. Each point in the second set of grid points represents one or more components of the electric field and/or pseudospin at a corresponding spatial point in the region being simulated. Together, the first grid and second grid define a plurality of Yee-cells. The plurality of Yee-cells may be described as a manifold of Yee cells.

In some embodiments, points in the second set of grid points are each identified with both pseudospin and electric field components. This type of grid may be particularly useful in one-dimensional simulations.

In some embodiments, the second set of grid points comprises a first sub-set of grid points (also referred to herein as the second grid, or electric field grid) and a second sub-set of grid points (herein also referred to as the third grid, or pseudospin grid). The first and second sub-sets of grid points are spatially offset from one another. The first sub-set of grid points (second grid) is associated with electric field components (i.e. each point in the second grid represents one or more components of the electric field at a corresponding spatial point in the region being simulated). The second sub-set of grid points (third grid) is associated with pseudospin components (i.e. each point in the third grid represents one or more components of the pseudospin at a corresponding spatial point in the region being simulated). Each pseudospin vector component is discretised on this sub-grid. This leads to $N^2\text{-}1$ pseudospin equations.

During simulation, values of a variable may be required at grid points on the grid associated with another variable. For example, values of the electric field may be required at grid points of the second subset of grid points (i.e. the grid points associated with the pseudospin). Values of the electric field at the second sub-set of grid points (third grid) may obtained by averaging the electric field components from nearest-neighbour grid points in the first sub-set of grid points (the second grid).

The grid geometry may be based on the properties of the quantum optical device and/or electromagnetic pulse being simulated, as certain device geometries may be suited to particular grid geometries. Periodic boundary conditions may be applied along one or more directions of the grid, allowing, for example, cylindrical geometries and/or periodic structures to be simulated.

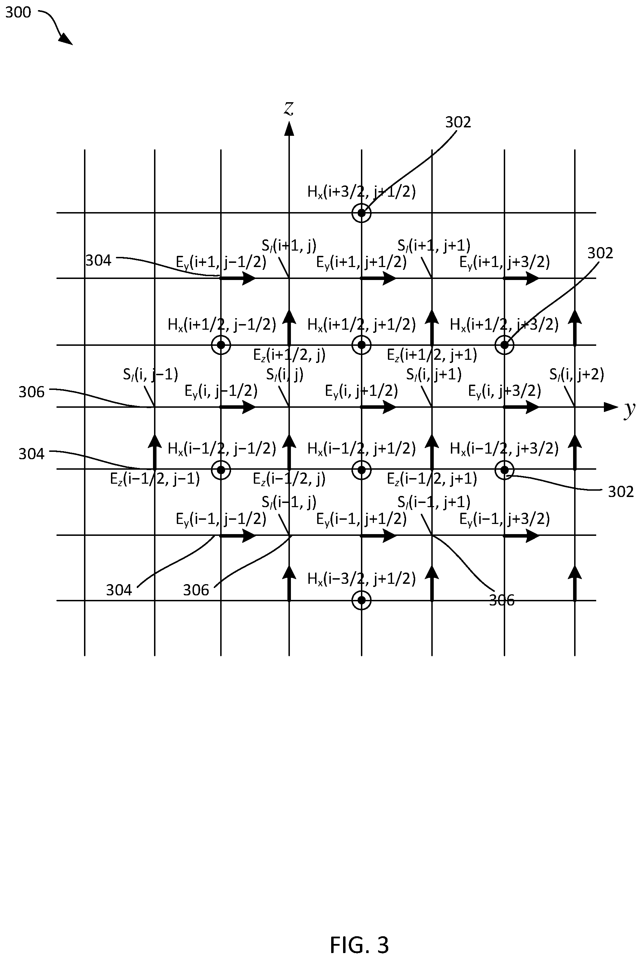

An example of a grid used in some embodiments of the method is described in relation to Figure 3 below. At operation 2.5, temporally shifted updating of the electric field components, the magnetic field components and the pseudospin components is performed on the grid to simulate time evolution of physical properties of the quantum optical device component under the electromagnetic pulse. The temporally shifted updating is based on Maxwell's curl equations and the pseudospin equations. These equations are coupled via the macroscopic polarisation, as described above.

Temporally shifted updating comprises updating the variables on different sets/sub-sets of grid points at staggered time instances based on the previous values of the variables on the set/sub-set of grid points currently being updated and the current values of the variables on the other sets/sub-sets of grid points. The different sets/sub-sets of grid points are effectively updated in a leapfrog manner in the time domain. In other words, the first and second sets of grid points are staggered/offset in both the temporal and spatial domains (and likewise for the second and third grids, where applicable).

During the temporally shifted updating, magnetic field components associated with the first set of grid points are updated at a first set of time steps. The electric field components and pseudospin components associated with the second set of grid points are updated at a second set of time steps that is offset/staggered from the first set of time steps.

In embodiments where the second set of grid points is divided into a first and second subset of grid points associated with the electric field components and pseudospin components respectively, the second set of time steps may be split into a first subset of time steps used to update the electric field components and a second subset of time steps used to update the pseudospin components. The first and second subsets of time steps are temporally offset from one another. In other words, the electric field components associated with the second grid are updated at a second set of time steps that is offset/staggered from the first set of time steps. The pseudospin components associated with the third grid are updated at a third set of time steps that is offset/staggered from both the first set of time steps and the second set of time steps.

The variables are updated based on Maxwell's curl equations and/or the pseudospin equations. Finite difference methods can be used to update the variables on the grid. Finite-Difference-Time-Domain (FDTD) methods can be used to model the time evolution of the electric field components, magnetic field components and pseudospin components on the grid.

In some embodiments, in order to obtain electric field, magnetic field and/or pseudospin components at mesh points (i.e. grid points) that are not defined during the discretisation procedure an averaging over the nearest neighbours in the grid may be performed.

In addition to being useful in itself, the time evolution of the fields within and/or surrounding the optical device component under the passage of the electromagnetic pulse can be used to predict one or more physical properties of the system. For example field-field correlation functions in both space and time may be calculated. These can be used to determine other physical properties of the system that may be of interest, such as cavity-dot photoluminescence spectrum using the first order field-field correlation function. The second order field-field correlation function of a dot-cavity photon emission can be used to predict quantum signatures of the system (e.g. amplitude or phase squeezing and/or quantum non-linearities).

Other examples of physical properties that can be determined from the time evolution of the quantum system include the Time-Resolved Photoluminescence (TRPL) of the system. This can be used to predict other properties of the system. For example, the TRPL trace in time may be used to determine lifetimes of particular excited states of the system. The TRPL may also be used to predict optical initialisation/readout of single spin states, for example in a charged semiconductor quantum dot. The TRPL trace may also be calculated.

Optical activity, such as Faraday rotation angles, may also be determined. The skilled person will recognise that there many other examples of physical properties that can be extracted from the time evolution of the electric fields, magnetic fields and/or pseudospin of the system.

Noise is be introduced into the simulation of the quantum system during temporally shifted updating of the electric field components, the magnetic field components and the pseudospin components. The noise can be used to model spontaneous emission of atoms within the quantum system. Quantum fluctuations are modelled by introducing random fluctuations to the electric field

Maxwell's equations. The fluctuations in the electric field are implemented by adding a fluctuation, $\delta E_j(r)$, to the electric field, $E_j(r)$, at each time step, $j$. The fluctuation may be generated using pseudorandom numbers.

The fluctuations may be constrained to obey a predefined statistical distribution, such as white Gaussian noise with a fixed variance. As an example, the statistical properties of the fluctuations may be constrained to satisfy:

$$\langle \delta E_x(r, t) \rangle = 0$$

$$\langle \delta E_x(r, t) \delta E_x(r, t') \rangle = \xi_E R_{sp} \delta\left(\frac{t - t'}{\Delta t}\right)$$

where

$$R_{sp} = \frac{\sqrt{\xi_E}(\varepsilon_0 \varepsilon)}{N_d \wp T_2}.$$

For example, for the x-component of the electric field in a one-dimensional two level system, Maxwell's equation becomes:

$$\frac{\partial}{\partial t}\left(E_x(r,t) + \delta E_x(r,t)\right) = -\frac{1}{\varepsilon}\frac{\partial H_y}{\partial z} - \frac{N_d \wp}{\varepsilon T_2}S_1 + \frac{N_d \wp \omega_0}{\varepsilon}S_2$$

where $\delta E_x(r, t)$ is the electric field fluctuation/noise. The noise may be in the form of white Gaussian noise with a fixed variance, $\xi_E$. For example, the variance may be 0.001 $V^2 m^{-2}$. To implement the fluctuations, at each time step, $j$, the x-component electric field is additionally updated, for example using:

$$E_{xj}(r) = E_{xj}(r) + \sqrt{-2\xi_E \ln a}\cos 2\pi b$$

where $a$ and $b$ are pseudo random numbers.

Other examples of predefined statistics that the fluctuations may be constrained to obey include, for example, thermal noise (e.g. Bose-Einstein), Poissonian (e.g. shot noise in lasers) or sub-Poissonian (e.g. quantum noise).

Fluctuations may be applied to the other components of the electric field in an analogous manner.

Figure 3 shows an example of a grid used for simulating a quantum optical device component. This example shows a grid 300 comprising a first set of grid points (the first grid 302) and a second set of grid points comprising a first sub-set of grid points (the second grid 304) and a second sub-set of grid points (the third grid 306). The first, second and third grids are each spatially offset from one another. The grid 300 is an example of a two-dimensional Yee grid that includes a pseudospin grid in addition to the magnetic and electric field grids. The horizontal axis 308 is taken to be the y-direction. The vertical axis 310 is taken to the z-direction. The x-direction extends out of the page.

In the embodiment shown, the grid 300 has a square geometry and is a two-dimensional grid. However, other gird geometries (e.g. rectangular, hexagonal, triangular, cubic etc.) and dimensionalities (i.e. one-dimensional and three-dimensional grids) may alternatively be used. The geometry of the embodiment shown may be used to simulate, for example, transverse magnetic (TM) waves. Similar grids may be used to simulate other wave types, such as transverse electric (TE) waves.

The first grid 302 is associated with magnetic field components of the magnetic field in the region being simulated, and is indicated by the circled points in the grid (note that not all of the grid points in the first grid are circled in Figure 3). In the example shown, each grid point in the first grid 302 is associated with a component of the magnetic field in the x-direction.

The second grid 304 (or first sub-set of the second set of grid points) is associated with electric field components of the electric field in the region being simulated, and is indicated by the points in the grid with an arrow extending from them (note that not all of the grid points in the second grid are indicated in Figure 3). In the example shown, each grid point in the second grid 304 is associated with a component of the electric field in either the y-direction or the z-direction.

The second grid 304 is offset from the first grid 302 such that the electric field components of the second grid 304 surround the magnetic components of the first grid 302. Each point in the first grid has four nearest-neighbour points in the second grid 306, two associated with y-components of the electric field and two associated with z-components of the electric field.

The third grid 306 (or second sub-set of the second set of grid points) is associated with pseudospin components of the pseudospin in the region being simulated, and is indicated by the points in the grid with a line extending from them (note that not all of the grid points in the third grid are indicated in Figure 3).

The third grid 306 is offset from the first grid 302 and second grids 304 such that the pseudospin components of the third grid 306 surround the magnetic components of the first grid 302. Each point in the first grid has four nearest-neighbour points in the third grid 306.

Together, the first grid 302, second grid 304 and third grid 306 define a plurality of Yee-cells. In the example shown, each Yee cell is a square, with magnetic field components at its centre, pseudospin components at its vertices, and electric field components at the centre of each of its edges.

During simulation of the quantum optical device, the variables associated with each grid are updated at offset/staggered time steps, as described above in relation to operation 2.5. The magnetic field components associated with the first grid are updated at a first set of time steps. The electric field components associated with the second grid are updated at a second set of time steps that is offset/staggered from the first set of time steps. The pseudospin components associated with the third grid are updated at a third set of time steps that is offset/staggered from both the first set of time steps and the second set of time steps.

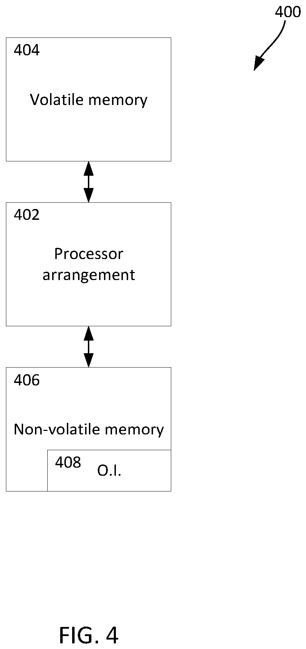

Figure 4 shows a schematic example of a system/apparatus for simulating a quantum optical device component. The system/apparatus shown is an example of a computing device. It will be appreciated by the skilled person that other types of computing devices/systems may alternatively be used to implement the methods described herein, such as a distributed computing system.

The apparatus (or system) 400 comprises one or more processors 402. The one or more processors control operation of other components of the system/apparatus 400. The one or more processors 402 may, for example, comprise a general purpose processor. The one or more processors 402 may be a single core device or a multiple core device. The one or more processors 402 may comprise a central processing unit (CPU) or a graphical processing unit (GPU). Alternatively, the one or more processors 402 may comprise specialised processing hardware, for instance a RISC processor or programmable hardware with embedded firmware. Multiple processors may be included.

The system/apparatus comprises a working or volatile memory 404. The one or more processors may access the volatile memory 404 in order to process data and may control the storage of data in memory. The volatile memory 404 may comprise RAM of any type, for example Static RAM (SRAM), Dynamic RAM (DRAM), or it may comprise Flash memory, such as an SD-Card.

The system/apparatus comprises a non-volatile memory 406. The non-volatile memory 406 stores a set of operation instructions 408 for controlling the operation of the processors 402 in the form of computer readable instructions. The non-volatile memory 406 may be a memory of any kind such as a Read Only Memory (ROM), a Flash memory or a magnetic drive memory.

The one or more processors 402 are configured to execute operating instructions 408 to cause the system/-apparatus to perform any of the methods described herein. The operating instructions 408 may comprise code (i.e. drivers) relating to the hardware components of the system/apparatus 400, as well as code relating to the basic operation of the system/apparatus 400. Generally speaking, the one or more processors 402 execute one or more instructions of the operating instructions 408, which are stored permanently or semi-permanently in the non-volatile memory 406, using the volatile memory 404 to temporarily store data generated during execution of said operating instructions 408.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 4, cause the computer to perform one or more of the methods described herein.

As noted above, the systems, methods and apparatus described herein may provide improvements in the design of quantum optical systems. In some embodiments, the simulation methodologies described above may be used in a method of validating a design for a quantum optical system.

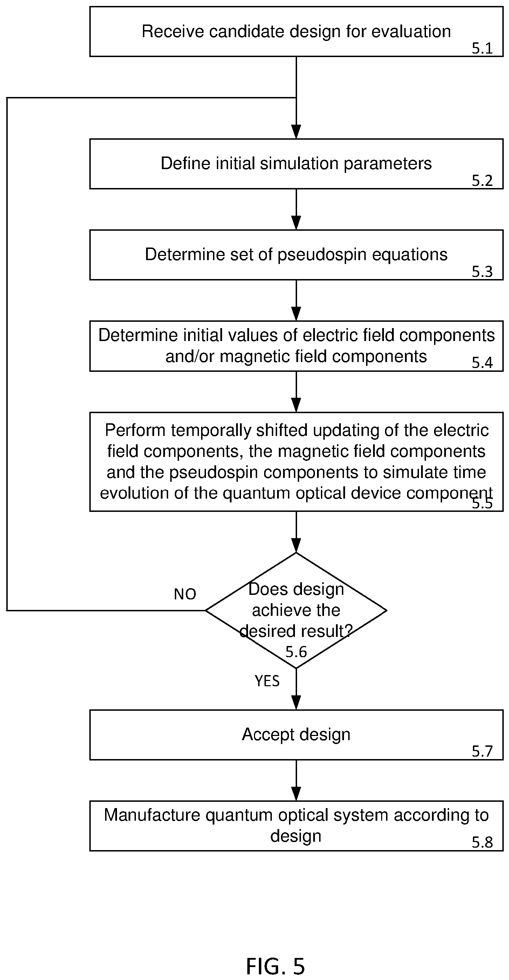

Referring now to Fig. 5, a flowchart showing a method of validating a design for a quantum optical system is illustrated, according to an embodiment of the present invention. First, at operation 5.1 a candidate design to be evaluated is received. Then, in operations 5.2 to 5.5 a computer-implemented method such as the one described above with reference to Fig. 2 is used to simulate the time evolution of the quantum optical system under the electromagnetic pulse. Initial simulation parameters including the properties of the quantum optical system are defined in operation 5.2 based on the candidate design for the quantum optical system. Operations 5.3 to 5.5 can be performed in a similar manner to operations 2.3 to 2.5 respectively, and for the sake of brevity a detailed description will not be repeated here.

Next, in operation 5.6 the simulated time evolution of the quantum optical system under the electromagnetic pulse is compared to a desired result. For example, the desired result may relate to a function that the quantum optical system is intended to perform when receiving an electromagnetic pulse with the defined properties. In response to the determined time evolution of the quantum optical system failing to achieve the desired result, the quantum optical system may be redesigned, and operations 5.2 to 5.5 can be repeated to validate the redesigned quantum optical system. On the other hand, in response to the determined time evolution of the quantum optical system achieving the desired result in operation 5.6, then in operation 5.7 the design can be validated, meaning that the design is deemed to be acceptable from a perspective of the simulated time evolution of the system when subjected to an electromagnetic pulse with the defined properties. Subject to the design meeting any other applicable design criteria, a physical embodiment of the designed quantum optical system may be manufactured in operation 5.8, according to the design that was validated in operation 5.7.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

**Claims**

1. A method of manufacturing a quantum optical system, the method comprising:

   receiving (5.1), by one or more processors, properties of the quantum optical system, the properties of the quantum system comprising a system Hamiltonian comprising an unperturbed Hamiltonian representing an N-level system and an interaction Hamiltonian representing a dipole coupling interaction, wherein $N \geq 2$, wherein the properties of the quantum optical system are based on a design for the quantum optical system;
   receiving, by the one or more processors, properties of an electromagnetic pulse or pulse trains;
   simulating, by the one or more processors, time evolution of the quantum optical system under the electromagnetic pulse, comprising:

   determining (5.3) a set of pseudospin equations based on the properties of the quantum optical system, wherein pseudospin vector components in the pseudospin equations are coupled to an electric and/or magnetic field via a macroscopic polarisation of the quantum optical system, and wherein the macroscopic polarisation of the quantum optical system is derived by expanding a local displacement operator of the macroscopic polarisation in terms of generators of the SU(N) Lie algebra and comparing the expansion to an expansion expressing the interaction Hamiltonian in terms of the generators of the SU(N) Lie algebra;
   determining (5.4) initial values of electric field components and/or magnetic field components, and pseudospin components on a grid corresponding to a region of space comprising the optical system based on the pseudospin equations and the properties of the electromagnetic pulse;
   performing (5.5) temporally shifted updating of the electric field components, the magnetic field components and the pseudospin components on the grid based on Maxwell's curl equations and the pseudospin equation to simulate time evolution of the quantum optical system under the electromagnetic pulse, comprising introducing one or more random fluctuations to the electric field components at each time step, wherein the one or more random fluctuations obey a pre-defined statistical distribution;

   comparing (5.6), by the one or more processors, physical quantities derived from the simulated time evolution of the quantum optical system under the electromagnetic pulse to a desired result;
   validating, by one or more processors, the design in response to the determined time evolution of the quantum optical system achieving the desired result; and
   manufacturing (5.8) the quantum optical system according to the validated design,
   wherein the grid comprises:

   a first set of grid points associated with the magnetic field components;
   a second set of grid points associated with the electric field and pseudospin components, wherein the second set of grid points is spatially offset from the first set of grid points.

2. The method of claim 1, wherein the second set of grid points comprises a first subset of grid points associated with the electric field components and a second subset of grid points associated with the pseudospin components, wherein the first subset of grid points and second subset of grid points are spatially offset.

3. The method of claim 1, wherein each grid point in the second set of grid points is associated with an electric field component and a pseudospin component.

4. The method of any preceding claim, wherein the set of pseudospin equations comprises a differential equation describing time evolution of a real pseudospin vector associated with a density matrix of the quantum optical device component.

5. The method of any preceding claim, wherein the set of pseudospin equations comprises the equations:

$$\frac{\partial S_i}{\partial t} = f_{ijk}\gamma_j S_k$$

where $S_i$ are the pseudospin components, $f_{ijk}$ are the structure constants of an SU(N) Lie algebra representing a density matrix of the quantum optical system, $\gamma_j$ are components of a torque vector representing the effects of the electromagnetic pulse and $t$ is time.

6. The method of any preceding claim, wherein the set of pseudospin equations comprise a damping term, and wherein the damping term comprising a longitudinal relaxation term and/or a dephasing relaxation term.

7. The method of any preceding claim, wherein performing temporally shifted updating of the electric field components, the magnetic field components and the pseudospin components on the grid comprises using a time-stepping predictor-corrector iterative method.

8. The method of any preceding claim, wherein performing temporally shifted updating of the electric field components, the magnetic field components and the pseudospin components on the grid comprises:

updating the magnetic field components at the first set of grid points at a first set of time steps using a finite-difference method; and
updating the electric field components and pseudospin components at the second set of grid points at a second set of time steps using a finite-difference method,
wherein the second set of time steps is temporally offset from the first set of time steps.

9. The method of any preceding claim, further comprising determining the first set of grid points and the second set of grid points in dependence on a geometry of the quantum optical system.

10. The method of any preceding claim, wherein the quantum optical system comprises one or more of: a quantum optical device component; a quantum-optical logic gate; a polarisation switch; a controlled phase gate; a spin-photon entangler; a quantum dot; a carbon nanotube; photonic crystal cavities; ring cavities; spherical cavities; and/or a semiconductor microcavity.

11. The method of any preceding claim, wherein the physical quantities derived from the simulated time evolution of the quantum optical system comprise one or more of: a lifetime of an excited state of the quantum optical device component; a spatial and/or temporal correlation function of electric fields in the quantum optical device component; a polarised Time-Resolved Photoluminescence trace; a Faraday rotation angle; polarisation rotation and/or a phase shift.

12. The method of any preceding claim, further comprising:
in response to the determined time evolution of the quantum optical system failing to achieve the desired result, redesigning the quantum optical system and repeating the method of claim 17 to validate the redesigned quantum optical system.

13. Apparatus comprising:

one or more processors (402); and
a memory (406), the memory comprising computer readable instructions (408) that, when executed by the one or more processors, cause the apparatus to perform the method of any preceding claim.

14. A computer program product comprising computer readable instructions that, when executed by a computer, cause the computer to perform the method of any of claims 1 to 12.

**Patentansprüche**

1. Verfahren zum Herstellen eines quantumoptischen Systems, das Verfahren umfassend: Empfangen (5.1), durch einen oder mehrere Prozessoren, von Eigenschaften des quantumoptischen Systems, die Eigenschaften des Quantumsystems umfassend einen System-Hamiltonoperator, umfassend einen ungestörten Hamiltonoperator, der ein N-Ebenen-System darstellt, und einen Wechselwirkungs-Hamiltonoperator, der eine Dipol-Kopplungswechselwirkung darstellt, wobei N≥2, wobei die Eigenschaften des quantumoptischen Systems auf einer Konstruktion für das quantumoptische System beruhen;

Empfangen, durch den einen oder die mehreren Prozessoren, von Eigenschaften eines elektromagnetischen Impulses oder von Impulsfolgen;

Simulieren, durch den einen oder die mehreren Prozessoren, der zeitlichen Entwicklung des quantumoptischen Systems unter dem elektromagnetischen Impuls, umfassend:

Bestimmen (5.3) einen Satz von Pseudospin-Gleichungen basierend auf den Eigenschaften des quantumoptischen Systems, wobei Pseudospin-Vektorkomponenten in den Pseudospin-Gleichungen über eine makroskopische Polarisation des quantumoptischen Systems mit einem elektrischen und/oder magnetischen Feld gekoppelt sind, und wobei die makroskopische Polarisation des quantumoptischen Systems abgeleitet wird, indem ein lokaler Verschiebungsoperator der makroskopischen Polarisation in Form von Generatoren der SU(N)-Lie-Algebra expandiert und die Expansion mit einer Expansion verglichen wird, die den Wechselwirkungs-Hamiltonoperator in Form der Generatoren der SU(N)-Lie-Algebra ausdrückt;

Bestimmen (5.4) von Anfangswerten der elektrischen Feldkomponenten und/oder der magnetischen Feldkomponenten und der Pseudospin-Komponenten auf einem Gitter, das einer Raumregion entspricht, die das optische System umfasst, basierend auf den Pseudospin-Gleichungen und den Eigenschaften des elektromagnetischen Impulses;

Durchführen (5.5) der zeitlich verschobenen Aktualisierung der elektrischen Feldkomponenten, der magnetischen Feldkomponenten und der Pseudospin-Komponenten auf dem Gitter basierend auf den Maxwell Curl-Gleichungen und der Pseudospin-Gleichung, um die zeitliche Entwicklung des quantumoptischen Systems unter dem elektromagnetischen Impuls zu simulieren, umfassend ein Einführen einer oder mehrerer Zufallsschwankungen in die elektrischen Feldkomponenten bei jedem Zeitschritt, wobei die eine oder die mehreren Zufallsschwankungen einer vordefinierten statistischen Verteilung folgen;

Vergleichen (5.6), durch den einen oder die mehreren Prozessoren, von physikalischen Größen, die aus der simulierten zeitlichen Entwicklung des quantumoptischen Systems unter dem elektromagnetischen Impuls abgeleitet werden, mit einem gewünschten Resultat;

Validieren, durch einen oder mehrere Prozessoren, der Konstruktion als Reaktion auf die bestimmte zeitliche Entwicklung des quantumoptischen Systems, das das gewünschte Resultat erzielt; und

Herstellen (5.8) des quantumoptischen Systems gemäß der validierten Konstruktion, wobei das Gitter Folgendes umfasst:

einen ersten Satz von Gitterpunkten, die mit den magnetischen Feldkomponenten assoziiert sind;

einen zweiten Satz von Gitterpunkten, die mit den elektrischen Feldkomponenten und den Pseudospin-Komponenten assoziiert sind, wobei der zweite Satz von Gitterpunkten räumlich von dem ersten Satz von Gitterpunkten versetzt ist.

2.  Verfahren nach Anspruch 1, wobei der zweite Satz von Gitterpunkten einen ersten Teilsatz von Gitterpunkten, die mit den elektrischen Feldkomponenten assoziiert sind, und einen zweiten Teilsatz von Gitterpunkten, die mit den Pseudospin-Komponenten assoziiert sind, umfasst, wobei der erste Teilsatz von Gitterpunkten und der zweite Teilsatz von Gitterpunkten räumlich versetzt sind.

3.  Verfahren nach Anspruch 1, wobei jeder Gitterpunkt in dem zweiten Satz von Gitterpunkten mit einer elektrischen Feldkomponente und einer Pseudospin-Komponente assoziiert ist.

4.  Verfahren nach einem vorhergehenden Anspruch, wobei der Satz von Pseudospin-Gleichungen eine Differentialgleichung umfasst, die die zeitliche Entwicklung eines realen Pseudospin-Vektors beschreibt, der mit einer Dichtematrix der quantumoptischen Vorrichtungskomponente assoziiert ist.

5.  Verfahren nach einem vorhergehenden Anspruch, wobei der Satz von Pseudospin-Gleichungen die folgenden Gleichungen umfasst:

$$\frac{\partial S_i}{\partial t} = f_{ijk}\gamma_j S_k$$

wobei $S_i$ die Pseudospin-Komponenten sind, $f_{ijk}$ die Strukturkonstanten einer SU(N)-Lie-Algebra sind, die eine Dichtematrix des quantumoptischen Systems darstellt, $\gamma_j$ Komponenten eines Drehmomentvektors sind, der die Auswirkungen des elektromagnetischen Impulses darstellt, und $t$ Zeit ist.

6. Verfahren nach einem vorhergehenden Anspruch, wobei der Satz von Pseudospin-Gleichungen einen Dämpfungsterm umfasst, und wobei der Dämpfungsterm einen longitudinalen Relaxationsterm und/oder einen Dephasierungsrelaxationsterm umfasst.

7. Verfahren nach einem vorhergehenden Anspruch, wobei ein Durchführen von zeitlich verschobenem Aktualisieren der elektrischen Feldkomponenten, der magnetischen Feldkomponenten und der Pseudospin-Komponenten auf dem Gitter ein Verwenden eines iterativen Verfahrens mit zeitlich fortschreitendem Prädiktor-Korrektor umfasst.

8. Verfahren nach einem vorhergehenden Anspruch, wobei ein Durchführen von zeitlich verschobenem Aktualisieren der elektrischen Feldkomponenten, der magnetischen Feldkomponenten und der Pseudospin-Komponenten auf dem Gitter Folgendes umfasst:

Aktualisieren der magnetischen Feldkomponenten an dem ersten Satz von Gitterpunkten in einem ersten Satz von Zeitschritten unter Verwendung eines Finite-Differenzen-Verfahrens; und
Aktualisieren der elektrischen Feldkomponenten und der Pseudospin-Komponenten an dem zweiten Satz von Gitterpunkten bei einem zweiten Satz von Zeitschritten unter Verwendung eines Finite-Differenzen-Verfahrens, wobei der zweite Satz von Zeitschritten zeitlich von dem ersten Satz von Zeitschritten versetzt ist.

9. Verfahren nach einem vorhergehenden Anspruch, ferner umfassend ein Bestimmen des ersten Satzes von Gitterpunkten und des zweiten Satzes von Gitterpunkten abhängig von einer Geometrie des quantumoptischen Systems.

10. Verfahren nach einem der vorhergehenden Ansprüche, wobei das quantumoptische System eines oder mehrere von Folgenden umfasst: eine quantumoptische Vorrichtungskomponente; ein quantumoptisches Logikgatter; einen Polarisationsschalter; ein kontrolliertes Phasengatter; einen Spin-Photonen-Verschränker; einen Quantumpunkt; ein Kohlenstoff-Nanoröhrchen; photonische Kristallhohlräume; Ringhohlräume; sphärische Hohlräume; und/oder einen Halbleiter-Mikrohohlraum.

11. Verfahren nach einem vorhergehenden Anspruch, wobei die aus der simulierten zeitlichen Entwicklung des quantumoptischen Systems abgeleiteten physikalischen Größen eines oder mehrere von Folgenden umfassen: eine Lebensdauer eines erregten Zustands der quantumoptischen Vorrichtungskomponente; eine räumliche und/oder zeitliche Korrelationsfunktion von elektrischen Feldern in der quantumoptischen Vorrichtungskomponente; eine polarisierte zeitaufgelöste Photolumineszenzspur; einen Faraday-Drehwinkel; eine Polarisationsdrehung und/oder eine Phasenverschiebung.

12. Verfahren nach einem der vorhergehenden Ansprüche, ferner umfassend:
als Reaktion darauf, dass die bestimmte zeitliche Entwicklung des quantumoptischen Systems nicht das gewünschte Resultat erzielt, Neukonstruktion des quantumoptischen Systems und Wiederholen des Verfahrens nach Anspruch 17, um das neukonstruierte quantumoptische System zu validieren.

13. Gerät, umfassend:

einen oder mehrere Prozessoren (402); und
einen Speicher (406), der Speicher umfassend computerlesbare Anweisungen (408), die, wenn sie von dem einen oder den mehreren Prozessoren ausgeführt werden, das Gerät veranlassen, das Verfahren nach einem der vorhergehenden Ansprüche durchzuführen.

14. Computerprogrammprodukt, umfassend computerlesbare Anweisungen, die, wenn sie von einem Computer ausgeführt werden, den Computer veranlassen, das Verfahren nach einem der Ansprüche 1 bis 12 durchzuführen.

**Revendications**

1. Procédé de fabrication d'un système optique quantique, le procédé comprenant :

la réception (5.1), par un ou plusieurs processeurs, de propriétés du système optique quantique, les propriétés du système quantique comprenant un hamiltonien du système comprenant un hamiltonien non perturbé représentant un système de niveau N et un hamiltonien d'interaction représentant une interaction de couplage dipolaire, dans lequel N ≥ 2, lesdites propriétés du système optique quantique étant basées sur une conception pour le système optique quantique ;

la réception, par le ou les processeurs, de propriétés d'une impulsion électromagnétique ou de trains d'impulsions électromagnétiques ;

la simulation, par le ou les processeurs, de l'évolution dans le temps du système optique quantique sous l'impulsion électromagnétique, comprenant :

la détermination (5.3) d'un ensemble d'équations de pseudo-spin sur la base des propriétés du système optique quantique, lesdites composantes de vecteur de pseudo-spin dans les équations de pseudo-spin étant couplées à un champ électrique et/ou magnétique par l'intermédiaire d'une polarisation macroscopique du système optique quantique, et ladite polarisation macroscopique du système optique quantique étant dérivée en développant un opérateur de déplacement local de la polarisation macroscopique en termes de générateurs de l'algèbre de Lie SU(N) et en comparant le développement à un développement exprimant l'Hamiltonien d'interaction en termes de générateurs de l'algèbre de Lie SU(N) ;

la détermination (5.4) de valeurs initiales de composantes de champ électrique et/ou de composantes de champ magnétique, et de composantes de pseudo-spin sur une grille correspondant à une région de l'espace comprenant le système optique sur la base des équations de pseudo-spin et des propriétés de l'impulsion électromagnétique ;

la réalisation (5.5) de la mise à jour décalée temporellement des composantes de champ électrique, des composantes de champ magnétique et des composantes de pseudo-spin sur la grille sur la base des équations de boucle de Maxwell et de l'équation de pseudo-spin pour simuler l'évolution dans le temps du système optique quantique sous l'effet de l'impulsion électromagnétique, comprenant l'introduction d'une ou de plusieurs fluctuations aléatoires dans les composantes de champ électrique à chaque pas de temps, ladite ou les dites fluctuations aléatoires obéissant à une distribution statistique prédéfinie ;

la comparaison (5.6), par le ou les processeurs, de quantités physiques dérivées de l'évolution dans le temps simulée du système optique quantique sous l'impulsion électromagnétique à un résultat souhaité ;

la validation, par un ou plusieurs processeurs, de la conception en réponse à l'évolution dans le temps déterminée du système optique quantique atteignant le résultat souhaité ; et la fabrication (5.8) du système optique quantique selon la conception validée,

ladite grille comprenant :

un premier ensemble de points de grille associés aux composantes de champ magnétique ;
un second ensemble de points de grille associés aux composantes de champ électrique et de pseudo-spin, ledit second ensemble de points de grille étant spatialement décalé par rapport au premier ensemble de points de grille.

2. Procédé de la revendication **1,** ledit second ensemble de points de grille comprenant un premier sous-ensemble de points de grille associés aux composants de champ électrique et un second sous-ensemble de points de grille associés aux composantes de pseudo-spin, ledit premier sous-ensemble de points de grille et ledit second sous-ensemble de points de grille étant décalés spatialement.

3. Procédé de la revendication **1,** chaque point de grille dans le second ensemble de points de grille étant associé à une composante de champ électrique et à une composante de pseudo-spin.

4. Procédé d'une quelconque revendication précédente, ledit ensemble d'équations de pseudospin comprenant une équation différentielle décrivant l'évolution dans le temps d'un vecteur de pseudo-spin réel associé à une matrice de densité du composant de dispositif optique quantique.

5. Procédé d'une quelconque revendication précédente, ledit ensemble d'équations de pseudospin comprenant les équations :

$$\frac{\partial S_i}{\partial t} = f_{ijk}\gamma_j S_k$$

où $S_i$ sont les composantes de pseudo-spin, $f_{ijk}$ sont les constantes de structure d'une algèbre de Lie SU(N) représentant une matrice de densité du système optique quantique, $\gamma_j$ sont les composantes d'un vecteur couple représentant les effets de l'impulsion électromagnétique et $t$ est le temps.

6. Procédé d'une quelconque revendication précédente, ledit ensemble d'équations de pseudospin comprenant un terme d'amortissement, et ledit terme d'amortissement comprenant un terme de relaxation longitudinale et/ou un terme de relaxation de déphasage.

7. Procédé d'une quelconque revendication précédente, ladite réalisation de la mise à jour décalée temporellement des composantes de champ électrique, des composantes de champ magnétique et des composantes de pseudo-spin sur la grille comprenant l'utilisation d'un procédé itératif prédicteur-correcteur à pas de temps.

8. Procédé d'une quelconque revendication précédente, ladite réalisation de la mise à jour décalée temporellement des composantes de champ électrique, des composantes de champ magnétique et des composantes de pseudo-spin sur la grille comprenant :

   la mise à jour des composantes de champ magnétique au niveau du premier ensemble de points de grille à un premier ensemble de pas de temps à l'aide d'une méthode des différences finies ; et
   la mise à jour des composantes de champ électrique et des composantes de pseudo-spin au niveau du second ensemble de points de grille à un second ensemble de pas de temps à l'aide de la méthode des différences finies, ledit second ensemble de pas de temps étant décalé temporellement par rapport au premier ensemble de pas de temps.

9. Procédé d'une quelconque revendication précédente, comprenant en outre la détermination du premier ensemble de points de grille et du second ensemble de points de grille en fonction d'une géométrie du système optique quantique.

10. Procédé d'une quelconque revendication précédente, ledit système optique quantique comprenant un ou plusieurs parmi : un composant de dispositif optique quantique ; une porte logique optique quantique ; un commutateur de polarisation ; une porte de phase commandée ; un enchevêtrement de spin-photon ; un point quantique ; un nanotube de carbone ; des cavités de cristaux photoniques ; des cavités annulaires ; des cavités sphériques ; et/ou une microcavité semiconductrice.

11. Procédé d'une quelconque revendication précédente, lesdites quantités physiques dérivées de l'évolution dans le temps simulée du système optique quantique comprenant un ou plusieurs parmi : une durée de vie d'un état excité du composant de dispositif optique quantique ; une fonction de corrélation spatiale et/ou temporelle de champs électriques dans le composant de dispositif optique quantique ; une trace de photoluminescence résolue en temps polarisée ; un angle de rotation de Faraday ; une rotation de polarisation et/ou un déphasage.

12. Procédé d'une quelconque revendication précédente, comprenant en outre :
   en réponse à l'évolution dans le temps déterminée du système optique quantique n'atteignant pas le résultat souhaité, la redéfinition du système optique quantique et la répétition du procédé de la revendication 17 pour valider le système optique quantique dont la conception a été revue.

13. Appareil comprenant :

   un ou plusieurs processeurs (402) ; et
   une mémoire (406), la mémoire comprenant des instructions lisibles par ordinateur (408) qui, lorsqu'elles sont exécutées par le ou les processeurs, amènent l'appareil à réaliser le procédé d'une quelconque revendication précédente.

14. Produit-programme informatique comprenant des instructions lisibles par ordinateur qui, lorsqu'elles sont exécutées par un ordinateur, amènent l'ordinateur à réaliser le procédé de l'une quelconque des revendications 1 à 12.

FIG. 1

Receive properties of a quantum optical device component

2.1

Receive properties of an electromagnetic pulse

2.2

Determine a set of pseudospin equations based on the properties of the quantum optical device component

2.3

Determine initial values of electric field components and/or magnetic field components, and pseudospin components on a grid corresponding to a region of space comprising the optical device component based on the pseudospin equations and the properties of the electromagnetic pulse

2.4

Perform temporally shifted updating of the electric field components, the magnetic field components and the pseudospin components on the grid based on Maxwell's curl equations and the pseudospin equation to simulate time evolution of physical properties of the quantum optical device component under the electromagnetic pulse

2.5

FIG. 2

FIG. 3

400

404

Volatile memory

402

Processor
arrangement

406

Non-volatile memory

408   O.I.

FIG. 4

Receive candidate design for evaluation
5.1

Define initial simulation parameters
5.2

Determine set of pseudospin equations
5.3

Determine initial values of electric field components and/or magnetic field components
5.4

Perform temporally shifted updating of the electric field components, the magnetic field components and the pseudospin components to simulate time evolution of the quantum optical device component
5.5

Does design achieve the desired result?
5.6

NO

YES

Accept design
5.7

Manufacture quantum optical system according to design
5.8

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. SLAVCHEVA et al.** Ultrafast pulse phase shift in a charged quantum dot-micropillar system. *Phys. Rev. B*, 2019, vol. 99, 115433
- **G. SLAVCHEVA et al.** Coupled Maxwell-pseudospin equations for investigation of self-induced transparency effects in a degenerate three-level quantum system in two-dimensions: Finite-difference time-domain study. *Phys. Rev.*, 2002, vol. A 66, 063418

- **G. SLAVCHEVA et al.** Nonlinear coherent magneto-optic response of a single chiral carbon nanotube. *New J. Phys.*, 2010, vol. 12, 103004